# EUROPÄISCHE PATENTANMELDUNG

(11) **EP 0 534 185 A1**
(43) Veröffentlichungstag der Anmeldung: **31.03.1993**
(21) Anmeldenummer: 92115036.3
(22) Anmeldetag: 03.09.1992
(51) Int. Cl.: B29C 45/14

(54) **Verfahren zur Herstellung eines Formkörpers**

(30) Priorität: 14.09.1991 DE 4130691
(71) Anmelder: Kabelwerke Reinshagen GmbH, D-42369 Wuppertal (DE)
(72) Erfinder: Oei, Giok-An, Dipl.-Ing., W-5600 Wuppertal 2 (DE); Poliwoda, Marcus, Dipl.-Ing., W-5600 Wuppertal 2 (DE)
(74) Vertreter: Priebisch, Rüdiger, Dipl.-Ing., Dipl.-Wirtsch.-Ing. (FH)

(57) **Zusammenfassung**

Zur Herstellung eines Formkörpers (10), der aus einem ersten vorgefertigten, plastisch verformbaren Teil (9) besteht und mit einem aus Kunststoff erstellten zweiten Teil (16) verbunden ist, das unter Einspritzung einer Kunststoffmasse in eine Gußform (1) hergestellt ist, wird das erste Teil (9) in die Gußform (1) eingelegt und danach die Kunststoffmasse zur Herstellung des zweiten Teiles (16) und zur Verbindung beider Teile (9, 16) untereinander in die Gußform (1) eingespritzt, wobei der Spritzdruck so gewählt wird, daß er ausreicht, um dem ersten Teil (9) die endgültige Form zu geben. Um ein solches Verfahren durch Verringerung bzw. Zusammenschluß von Verfahrensschritten zu vereinfachen, bestehen das erste Teil (9) und/oder zweite Teil (16) zumindest teilweise aus lichtdurchlässigem Material, und das erste Teil (9) besteht aus mindestens einer Folie (12), die farbig hergestellt ist oder auf mindestens einer Seite bedruckt oder beschichtet ist.

## Beschreibung

Die Erfindung betrifft ein Verfahren zur Herstellung eines Formkörpers, der aus einem ersten vorgefertigten, plastisch verformbaren Teil besteht und mit einem aus Kunststoff erstellten zweiten Teil verbunden ist, das unter Einspritzung einer Kunststoffmasse in eine Gußform hergestellt ist. Das erste Teil wird in die Gußform eingelegt und danach die Kunststoffmasse zur Herstellung des zweiten Teiles und zur Verbindung beider Teile untereinander in die Gußform eingespritzt. Der Spritzdruck ist dabei so gewählt, daß er ausreicht, um dem ersten Teil die endgültige Form zu geben.

Bei derartigen Formkörpern handelt es sich um jegliche Art von gespritzten Gegenständen, deren räumliche Abformung mittels eines vorgefertigten Teiles, vorzugsweise mit Folie, erfolgt.

Aus der DE-OS 1629710 ist es bekannt, einen Gegenstand aus Kunststoff herzustellen, indem eine thermoplastische Folie entsprechend der Oberflächengestalt des zu beschichtenden Spritzgußteiles vorgeformt wird und das Verbinden der Folie mit dem Gegenstand durch Spritzgießen des Gegenstandes auf oder in die Folie erfolgt, wobei die beiden Kunststoffe miteinander verschmelzen sollen. Die Verformung der Folie erfolgt mittels Tiefziehtechnik in einer gesonderten Tiefziehform, d.h. für die Formgebung des kompletten Gegenstandes werden zwei Verfahrensschritte benötigt. Wegen des Verschmelzens müssen gedruckte Dekors auf den Folien auf der dem Grundkörper abgewandten Seite, also außenseitig, angeordnet sein und sind deshalb auf Dauer nicht abriebfest.

In der DE-OS 3322418 wird ein Verfahren beschrieben, bei dem zur Herstellung einer griffsicheren, schmutzunempfindlichen, beleuchtbaren Taste mit auf Dauer gut lesbaren Schriftzeichen eine Folie nach ihrer Präparierung mehrdimensional verformt wird, um dann mit dem Grundkörper direkt verbunden zu werden.

Die beiden Teile können unter anderem auch dadurch zusammengefügt werden, daß die mehrdimensional verformte Folie in ein Werkzeug eingelegt wird, in das dann geschmolzener Kunststoff zur Herstellung des Grundkörpers eingespritzt wird.

Bevor der Verbund zwischen der Folie und dem Grundkörper erfolgt, muß die präparierte Folie in einem Prägevorgang ihre endgültige Form erhalten. Hier sind ebenfalls zwei Verfahrensschritte erforderlich, damit sowohl die Folie als auch der Grundkörper ihre endgültige Form erhalten. Es entstehen neben den Kosten für das Prägewerkzeug auch zeitabhängige Kosten für den entsprechenden Verfahrensschritt.

Aufgabe der Erfindung ist es, durch Verringerung bzw. Zusammenschluß von Verfahrensschritten die Herstellung von Formkörpern der eingangs genannten Art zu vereinfachen.

Die Aufgabe wird dadurch gelöst, daß das erste und/oder zweite Teil zumindest teilweise aus lichtdurchlässigem Material bestehen und das erste Teil aus mindestens einer Folie besteht, die farbig hergestellt ist oder auf mindestens einer Seite bedruckt oder beschichtet ist.

Die in üblicher Weise vorgefertigten ersten Teile können bei Bedarf dem Lagerregal entnommen werden, um dann kurzfristig evtl. nach dem Ausstanzen zusammen mit dem zweiten Teil die endgültige Form zu erhalten. Dieses Verfahren ist sehr wirtschaftlich, da das erste Teil nicht in einem separaten Verfahrensschritt endverformt werden muß. Je nach Anwendung ist das erste Teil bereits farbig hergestellt oder wird in herkömmlicher Weise beschichtet bzw. bedruckt und danach in eine entsprechende Gußform eingelegt und hinterspritzt. Die separate Endverformung des ersten Teiles entfällt und damit die Kosten für ein Werkzeug. Folglich wird die für den Verfahrensschritt notwendige Zeit in der Produktion und die sonst entstehenden Lohnkosten eingespart. Darüber hinaus ist das Verfahren leicht automatisierbar. Das erste Teil besitzt eine ausreichende Stabilität, um problemlos in der Gußform die Form einzuhalten und danach mit dem zweiten Teil zu verschmelzen. Trotzdem können die Teile als dünne Folien ausgebildet werden, so daß aufgebrachte Symbole oder Dekore konturenscharf wiedergegeben werden.

Nachdem das erste Teil vorgefertigt ist, wird es in die Gußform eingelegt und dort fixiert, um zu verhindern, daß es sich gegenüber einer vorgeschriebenen Einlegeposition verschiebt.

Dieser Vorgang kann aus Gründen der Wirtschaftlichkeit und der Einlegegenauigkeit von einem Roboter durchgeführt werden. Die richtige Positionierung ist wichtig, damit ein qualitativ hochwertiges Endprodukt entsteht. Falsch oder versetzt eingelegte Teile führen zu unsauberen Nahtstellen, Unschärfen bis hin zur Unbrauchbarkeit des Formkörpers. Wird das erste Teil etwas größer gefertigt als die Innenabmessungen der Gußform, so erfolgt die Positionierung durch die Stauchung des ersten Teiles. Besser eignen sich zur Fixierung mechanische Haltevorrichtungen innerhalb der Gußform oder ein auf das erste Teil wirkender Unterdruck. Über die Innenwände der Gußform sind Haltevorrichtungen so verteilt, daß eine stabile, sichere und richtige Lage des ersten Teiles gewährleistet ist. Diese Vorrichtungen können z.B. als Auflagen, Rastnasen oder Nuten ausgebildet sein, die entweder während des Spritzvorganges in die Gußform zurückgezogen werden oder die so kleine Abdrücke hinterlassen, daß sie am fertigen Produkt weder Funktion noch Aussehen beeinträchtigen. Das erste Teil kann auch nach der Positionierung in der Gußform durch Unterdruck in der richtigen Lage gehalten werden. Hierbei bleibt die Kavität einfach ausgebildet. Es werden keine aufwendigen Halterungen erforderlich, die dann nur den Spritzvorgang erschweren und außerdem die Anfälligkeit der Gußform erhöhen. Der Unterdruck wird in der Kavität durch mehrere in Ober- oder Unterteil der Gußform eingelassene Bohrungen erzeugt. Günstig ist es, die Unterdruckbohrungen an dem Teil der Gußform anzubringen, mit dem die später außenliegende Seite des ersten Teiles beim Spritzvorgang in Berührung kommt. Die eingespritzte Masse drückt das erste Teil gegen das Formoberteil, wobei der Unterdruck entsprechend reduziert wird.

Je nach Anwendung müssen erfindungsgemäße Formkörper unterschiedlichste Anforderungen erfüllen. Deshalb ist es von Vorteil, das vorgefertigte erste Teil aus mehreren Einzelteilen und/oder verschiedenartigen Materialien herzustellen.

Es können mehrschichtige Teile gefertigt werden, die durch ihren Aufbau besonderen physikalischen Eigenschaften genügen, wie z.B. Wärmebeständigkeit, Umweltbeständigkeit und Griffigkeit. Außerdem besteht die Möglichkeit, die Oberfläche des ersten Teiles in Farbgebung und Symbolik vielfältig zu variieren und zu kombinieren.

Des weiteren ist es möglich, spezielle Schutzschichten einzuarbeiten. Unterschiedlich starre oder dicke Materialien ermöglichen Varianten in der Stabilität des Teiles. Der Schichtenaufbau vereinfacht die Herstellung des ersten Teiles, da bei unterschiedlichen Anforderungen nur Schichten ausgetauscht oder in anderer Schichtfolge aufgebaut werden müssen.

Das Dickenverhältnis zwischen dem ersten und dem zweiten Teil kann sehr unterschiedlich sein. Häufig dient das erste Teil zur Oberflächen bzw. Symbolgestaltung und Farbgebung eines Körpers. Das erste Teil wird dann äußerst dünnschichtig gestaltet und besteht aus einer oder mehreren Folien. Die Folientechnik unterstützt das häufige Bestreben nach Gewichtseinsparung und ersetzt herkömmliche Verfahren zur Herstellung von Formkörpern. Die Einlegetechnik und das sogenannte Mehrkomponentenspritzen sind sehr teuer, da dazu komplizierte Werkzeuge benötigt werden, die außerdem nur unter erheblichem Aufwand auf Layout-Änderungen umstellbar sind.

Die Folien können auch als Informationsträger dienen und sind zu diesem Zweck bereits farbig hergestellt oder mit entsprechenden Symbolen bedruckt bzw. beschichtet. Im Rahmen der Vorfertigung lassen sich die Symbole durch Bedrucken flacher Folien einfach durch Siebdruck herstellen, so daß auch kleinere Serien, wie sie für selten und besondere Symbole erforderlich sind, preiswert zu fertigen sind. Die Information kann sich auch aus mehreren übereinanderliegenden Folien zusammensetzen. Vorteilhaft ist dies bei Formkörpern mit unterschiedlichem Tag-/Nacht-Design. Bei Dunkelheit werden die Informationen beleuchtet und oft in einer speziellen Farbkombination angezeigt. Die Symbole werden konturenscharf abgebildet, da der Druck bereits im unverformten Zustand erfolgt.

So sind auch Symbole mit dünnen Linien darstellbar. Bei einem bekannten Verfahren wird diese Bedruckung nach der endgültigen Formgebung des Körpers durchgeführt. Um annähernd gleiche Ergebnisse zu bekommen, wie bei dem erfindungsgemäßen Verfahren, ist dabei mehrmaliges Bedrucken notwendig.

Die Verbindung zwischen den einzelnen Folien kann am einfachsten dadurch erfolgen, daß die miteinander in Berührung kommenden Flächen mit einem Kleber beschichtet werden. Als Kleber kommen insbesondere Materialien in Frage, die durch die während des Spritzvorganges erhitzte Spritzgußmasse nicht wieder aufgelöst werden, wie z.B. Heißsiegelkleber. Das erste Teil kann vor dem Einlegen in die Gußform gefertigt werden, d.h. es wird Klebstoff zwischen` die einzelnen Folien aufgetragen, der anschließend mittels Hitzebehandlung aktiviert wird. Vorteilhaft ist es, diesen Verfahrensschritt ebenfalls in der Gußform auszuführen. Jede Folie wird einzeln eingelegt und mit Klebstoff beschichtet, bis der angestrebte Aufbau erreicht ist. Die während des Spritzvorgangs entstehende Wärme genügt, um die einzelnen Folien zu verkleben.

Wenn das erste Teil aus einer farbigen oder einseitig bedruckten bzw. beschichteten Folie besteht, ist es sinnvoll, die Folie so in die Gußform einzulegen, daß die Bedruckung der einzuspritzenden Kunststoffmasse gegenüberliegt. Die Symbole können spiegelbildlich gedruckt sein. Auf diese Weise sind die Symbole auf Dauer vor Abrieb geschützt, da nur die Folie mit der Umwelt in Berührung kommt. Die Verbindung zwischen der bedruckten Folie und der Spritzgußmasse ist abhängig von der Art der verwandten Druckfarbe. Farben, die auf der Basis von Acryl oder PUR hergestellt sind, gehen eine dauerhafte Verbindung mit den üblichen Spritzgußmaterialien ein. Eignet sich die Druckfarbe nicht zur Verbindung mit dem Spritzgußmaterial, wird eine zusätzliche Folie aufgetragen, die mit dem Spritzgußmaterial verschmilzt. So ist neben dem Schutz vor mechanischen und chemischen Einflüssen der Umwelt auch Schutz vor den im Spritzverfahren auftretenden Parametern, wie z.B. Druck und Temperatur, gewährleistet.

Die Formkörper können durch den Einsatz von lichtdurchlässigen Materialien auch beleuchtbar gestaltet werden. Eine Lichtquelle wird hinter oder in unmittelbarer Nähe des Formkörpers angeordnet, damit dem Anwender bei Dunkelheit bestimmte Funktionszustände sichtbar gemacht werden. Diese mindestens teilweise transparenten oder transluzenten Folien werden auf der Rückseite mit spiegelbildlicher Symbolik bedruckt und dann mit zumindest teilweise transparenter Spritzgußmasse hinterspritzt, durch die Licht hindurchstrahlt. Es ist auch möglich, das zweite Teil lichtundurchlässig, aber mit Öffnungen für die Lichtquelle, auszubilden und dann nur das erste Teil zu hinterleuchten. Der einfache und vielfältige Druck von Informationen auf die Folien mit bekannten und hochwertigen Verfahren, kombiniert mit der anschließenden Endformgebung gemäß des erfindungsgemäßen Verfahrens, bringt qualitativ hochwertige und einfach produzierbare beleuchtbare Informationsträger hervor.

In einer möglichen Ausführungsform ist das erste Teil u.a. auch aus leitfähigem Material aufgebaut. Solch ein Formkörper kann in elektrische Schaltungen integriert werden und dort mittels Berührung oder durch Druckausübung Schaltfunktionen auslösen oder selbst übernehmen. Denkbar sind z.B. Sensorschalter oder Schnappelemente für Taster.

Die Verbindung zwischen dem ersten Teil und der Spritzgußmasse erfolgt dadurch, daß das erste Teil wenigstens teilweise aus dem gleichen oder ähnlichen Material aufgebaut ist wie die Spritzmasse. Der bisherige Aufbau des ersten Teiles wird ggfs. mit einer zusätzlichen Folie beaufschlagt, die mit der Spritzgußmasse eine bleibende Verbindung eingeht. Beim Spritzen der Spritzgußmasse in die mit dem eingelegten ersten Teil ausgerüsteten Gußform entsteht eine Temperatur, die ausreicht, um die Spritzgußmasse und die damit in Berührung kommende Folie zusammenzuschmelzen. Als Material für das erste und/oder zweite Teil eignet sich u.a. Polycarbonat, da es zu den Standardmaterialien in der Spritzgußtechnik gehört. Es ist technisch ausgereift und daher leicht und günstig zu produzieren.

Das erfindungsgemäße Verfahren eignet sich z.B. auch zur Herstellung von Bauteilen, die auf Abrieb beansprucht werden. Jegliche Art von Tast- oder Schaltelementen können so produziert werden. Taster werden u.a. zur Betätigung von Schreib- und Rechenmaschinen und als Auslöser vieler Funktionen im Automobilbau benötigt. Um die Funktion der verschiedenen Tasten zu kennzeichnen, werden sie mit entsprechenden Symbolen versehen, die auf Dauer und bei Nacht gut lesbar sein müssen. Die Herstellung von griffsicheren, schmutzunempfindlichen, durchleuchtbaren Tasten ist erfindungsgemäß mit geringstem Aufwand möglich.

In den Zeichnungen ist eine Ausführungsform der Erfindung anhand eines Werkzeuges zur Durchführung des Verfahrens und einer danach hergestellten Taste dargestellt, die im folgenden näher beschrieben wird.
- Figur 1: zeigt eine offene Gußform mit einem eingelegten ersten Teil,
- Figur 2: zeigt die Gußform aus Figur 1 in zugefahrenem Zustand,
- Figur 3: zeigt eine Taste im Querschnitt, die nach dem erfindungsgemäßen Verfahren hergestellt ist,
- Figur 4: zeigt die Taste gemäß Figur 3 in einer Draufsicht.

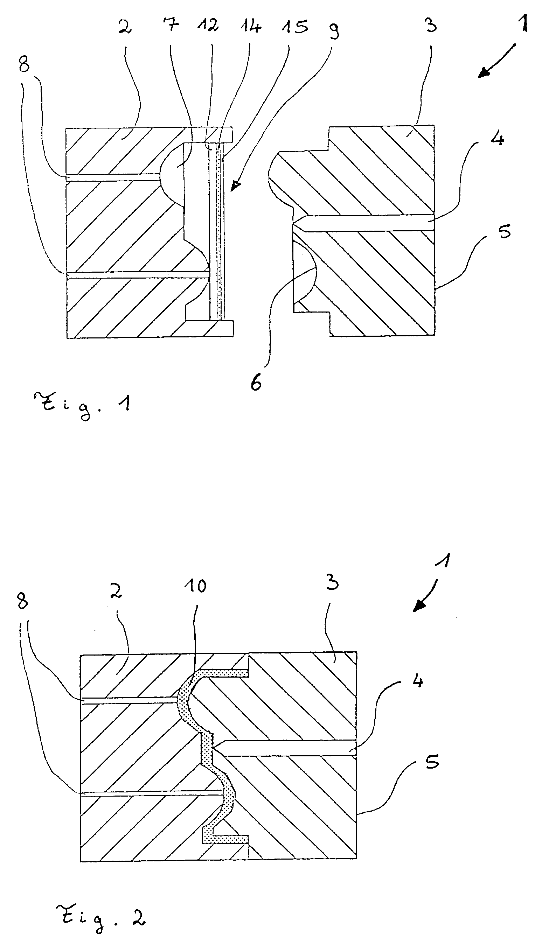

In Figur 1 ist ein Querschnitt einer auseinandergefahrenen Gußform 1 dargestellt, die aus einem Oberteil 2 und einem Unterteil 3 besteht. Diese Gußform 1 ist vorzugsweise aus einem wärme- und druckbeständigen Material, wie z.B. Stahl, gefertigt. Das Unterteil 3 ist mit einem Angußkanal 4 versehen, der von der Außenseite 5 zur Innenseite 6 der Gußform 1 führt. Durch diesen Kanal 4 wird eine Kunststoffmasse, z.B. Polycarbonat, unter einem Druck von ca. 100 bar aus einem nicht dargestellten System in die Kavität 7 eingeleitet. Das Oberteil 2 ist mit zwei Unterdruckbohrungen 8, 8' ausgebildet, die ein erstes Teil 9 lagerichtig fixieren.

Ein nicht dargestelltes Druckluftsystem erzeugt einen definierten Unterdruck, der das erste Teil 9 "ansaugt". Der Hohlraum 7 der Gußform 1 ist zur Herstellung einer Taste 10 mit einer konvexen 11 und einer konkaven Betätigungsfläche 11' ausgebildet. Ein unverformtes, zweidimensionales erstes Teil 9 ist in das Oberteil 2 der Gußform 1 eingelegt und in dem Stadium des wirkenden Unterdrucks dargestellt. Das erste Teil 9 ist in diesem Ausführungsbeispiel in Folientechnik hergestellt worden. In Figur 1 ist das erste Teil 9 zur besseren Veranschaulichung im übergroßen Maßstab dargestellt. Es besteht aus einer Trägerfolie 12, die die aufliegende mit Symbolen 13, 13' bedruckte zweite Folie 14 und eine abschließende Schutzfolie 15 trägt. Diese Schutzfolie 15 besteht aus einem Polycarbonat und verhindert den direkten Kontakt zwischen der Spritzgußmasse und der Bedruckung der zweiten Folie 14. Die Trägerfolie 12 besteht ebenfalls aus Polycarbonat und schützt die zweite Folie 14 vor Umwelteinflüssen. Die Verbindung der Folien 12, 14, 15 erfolgt mit einem hitzebeständigen Kleber. Die Folien 12, 14, 15 sind zwischen 0,2 und 0,4 mm dick und alle aus einem lichtdurchlässigen Material gefertigt, damit die Symbole 13 der Taste 10 beleuchtet werden können.

Die Figur 2 zeigt den zusammengefahrenen formgebenden Zustand der Gußform 1. Das Spritzmaterial hat die Folie 9 gegen das Oberteil 2 der Form 1 gedrückt und den Hohlraum 7 zur Bildung des zweiten Teiles 16 vollständig ausgefüllt. Die Einführung der Spritzgußmasse erfolgt bei einer Temperatur von ca. 200°C. Bei dieser Temperatur geht die Spritzgußmasse mit der aus Polycarbonat bestehenden Schutzfolie 15 eine bleibende Verbindung ein.

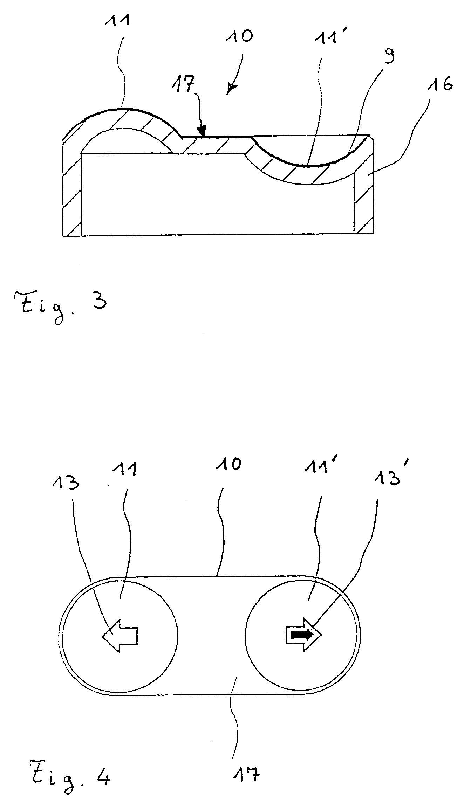

In Figur 3 ist die fertige Taste 10 im Querschnitt dargestellt. An der Oberfläche 17 der Taste 10 liegt das lichtdurchlässige mit Symbolen 13 bedruckte erste Teil 9. Bei Dunkelheit beleuchten unter der Taste 10 angebrachte Lichtquellen (nicht dargestellt) die Symbole 13, 13' der Taste 10 (Figur 4). Je nach Farbgestaltung des Spritzgußmaterials können auch direkt unter dem Symbol 13 der Folie 9 eingelassene Hohlräume im zweiten Teil 16 die Lichtquelle aufnehmen. Dies ermöglicht den Einsatz von lichtundurchlässigen Spritzgußmaterialien, da dann nur das erste Teil 9 lichtdurchlässig sein muß.

### Bezugszeichenliste:

- 1: Gußform
- 2: Oberteil
- 3: Unterteil
- 4: Angußkanal
- 5: Außenseite
- 6: Innenseite
- 7: Kavität, Hohlraum
- 8: Unterdruckbohrung
- 9: erstes Teil
- 10: Formkörper, Taste
- 11: konvexe Betätigungsfläche
- 11': konkave Betätigungsfläche
- 12: Trägerfolie
- 13: Symbol
- 13': Symbol
- 14: zweite Folie
- 15: Schutzfolie
- 16: zweites Teil
- 17: Oberfläche

## Patentansprüche

1. Verfahren zur Herstellung eines Formkörpers, der aus einem ersten vorgefertigten, plastisch verformbaren Teil besteht und mit einem aus Kunststoff erstellten zweiten Teil verbunden ist, das unter Einspritzung einer Kunststoffmasse in eine Gußform hergestellt ist, wobei das erste Teil (9) in die Gußform (1) eingelegt wird und danach die Kunststoffmasse zur Herstellung des zweiten Teiles (16) und zur Verbindung beider Teile (9, 16) untereinander in die Gußform (1) eingespritzt wird, und der Spritzdruck so gewählt wird, daß er ausreicht, um dem ersten Teil (9) die endgültige Form zu geben, dadurch gekennzeichnet, daß das erste (9) und/oder zweite Teil (16) zumindest teilweise aus lichtdurchlässigem Material bestehen und daß das erste Teil (9) aus mindestens einer Folie (12) besteht, die farbig hergestellt ist oder auf mindestens einer Seite bedruckt oder beschichtet ist.

2. Verfahren zur Herstellung eines Formkörpers nach Anspruch 1, dadurch gekennzeichnet, daß das erste Teil (9) mit Hilfsmitteln in seiner Einlegeposition in der Gußform (1) fixiert wird.

3. Verfahren zur Herstellung eines Formkörpers nach Anspruch 2, dadurch gekennzeichnet, daß Halterungen an der Innenwand (6) der Gußform (1) das erste Teil (9) fixieren.

4. Verfahren zur Herstellung eines Formkörpers nach einem der Ansprüche 2 oder 3, dadurch gekennzeichnet, daß das erste Teil (9) mittels eines durch mehrere Öffnungen (8) in der Gußformwand erzeugten Unterdrucks fixiert wird.

5. Verfahren zur Herstellung eines Formkörpers nach einem der Ansprüche 1 bis 4, dadurch gekennzeichnet, daß das erste Teil (9) aus mehreren Folien (12, 14, 15) und/oder verschiedenartigen Materialien vorgefertigt ist.

6. Verfahren zur Herstellung eines Formkörpers nach Anspruch 5, dadurch gekennzeichnet, daß die Folien (12, 14, 15) miteinander verklebt sind.

7. Verfahren zur Herstellung eines Formkörpers nach einem der Ansprüche 1 bis 6, dadurch gekennzeichnet, daß das erste Teil (9) so in die Gußform (1) eingelegt wird, daß eine bedruckte oder beschichtete Seite der einzuspritzenden Kunststoffmasse gegenüber liegt.

8. Verfahren zur Herstellung eines Formkörpers nach einem der Ansprüche 1 bis 7, dadurch gekennzeichnet, daß das erste (9) und/oder zweite Teil (16) zumindest teilweise aus leitfähigem Material bestehen.

9. Verfahren zur Herstellung eines Formkörpers nach einem der Ansprüche 1 bis 8, dadurch gekennzeichnet, daß das erste Teil (9) und/oder zweite Teil (16) aus Polycarbonat bestehen.

10. Verfahren zur Herstellung eines Formkörpers nach einem der Ansprüche 1 bis 9, dadurch gekennzeichnet, daß das zweite Teil (16) mit einer Öffnung für eine Lichtquelle ausgebildet ist.
